# EUROPÄISCHE PATENTSCHRIFT

(11) **EP 1 764 263 B1**
(45) Veröffentlichungstag und Bekanntmachung des Hinweises auf die Patenterteilung: **12.11.2008**
(21) Anmeldenummer: 05020221.7
(22) Anmeldetag: 16.09.2005
(51) Int. Cl.: B60P 1/44

(54) **Ladebordwandsystem zur Befestigung an Rahmen von Fahrzeugen**
Loading tailgate system for fastening on a vehicle frame
Système de hayon élévateur pour fixer sur un chassis de véhicule

(43) Veröffentlichungstag der Anmeldung: 21.03.2007
(73) Patentinhaber: Sörensen Hydraulik, Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole

(56) Entgegenhaltungen:
- EP-A- 0 805 069
- EP-A- 0 808 747
- EP-A- 1 036 698
- DE-U1- 20 009 019
- DE-U1-4202004 014 72
- US-A- 2 725 152
- US-A- 2 792 135

## Beschreibung

Die Erfindung betrifft ein Ladebordwandsystem zur Befestigung an Rahmen von Fahrzeugen, wobei der Fahrzeugrahmen im wesentlichen aus zwei voneinander im wesentlichen parallel beabstandeten Trägerelementen besteht, insbesondere von Lastkraftfahrzeugen, umfassend wenigstens ein im wesentlichen parallelogrammförmiges, aus zwei im wesentlichen parallel voneinander beabstandeten Tragwerken bestehendes Hubtragwerk, eine im wesentlichen plattenförmige Ladebordwand zum Heben und Absenken einer Last und wenigstens einen Hubaktuator zum Heben und Senken der Ladebordwand, und wobei die Befestigung des ersten und des zweiten Tragwerks über jeweils ein gesondertes, im wesentlichen am Fahrzeugrahmen zu befestigendes Befestigungselement erfolgt, und jeweils an im wesentlichen vertikal ausgerichteten Seiten des Trägerelementes jeweils eines der Befestigungselemente über ein im Querschnitt im wesentlichen L-profilförmiges Anpaßelement befestigbar ist.

Ein Ladebordwandsystem dieser Art ist bekannt (EP-B-0 808 747). Ein plattenförmiges Befestigungselement, über das die Befestigung des ersten und des zweiten Tragwerks am Rahmen ohne Zwischenschaltung weiterer Konstruktionselemente erfolgt, ist insbesondere aus der EP-B-1 000 802, das aus einer Teilung des gattungsbildenden Patentes gemäß der EP-B-0 808 747 hervorgegangen ist.

Die in beiden Patenten beschriebenen Ladebordwandsysteme können derart konstruktiv ausgestaltet sein, daß sowohl ein Heben und Absenken der Ladebordwand als auch ein Klappen der Ladebordwand von der Horizontalen in die Vertikale und umgekehrt möglich ist, die Ladebordwandsysteme können aber auch derart ausgestaltet sein, daß lediglich ein Anheben und Absenken der Ladebordwand möglich sein soll, d.h. keine Klappfunktion der Ladebordwand von der Horizontalen in die Vertikale erfolgen soll. Solche letzteren Ladebordwandsysteme weisen in der Regel eine klapp- bzw. faltbare Ladebordwand auf, die bei Nichtgebrauch unter dem hinteren Ende des Fahrzeugs verstaut wird, wenn der Ladevorgang abgeschlossen ist. Beide vorbeschriebenen Ladebordwandsysteme werden von der nachfolgend beschriebenen Erfindung umfaßt.

Die zuvor beschriebenen, in der Ausgestaltung konstruktiv unterschiedlichen Ladebordwandsysteme werden in der Regel von anderen Herstellerbetrieben hergestellt als die eigentlichen Kraftfahrzeuge, an denen die Ladebordwandsysteme zum bestimmungsgemäßen Betrieb zu befestigen bzw. anzubauen sind. Die Konstruktionsprinzipien der unterschiedlichen Fahrzeughersteller im Hinblick auf das Chassis des Fahrzeugs, insbesondere des regelmäßig dabei vorhandenen gesonderten Fahrzeugrahmens, variieren von Fahrzeughersteller zu Fahrzeughersteller zum Teil sehr erheblich und variiert zudem noch erheblich in Abhängigkeit der Größe des Fahrzeugs.

Während bspw. große Lastkraftwagen als Fahrzeugrahmen regelmäßig parallel voneinander beabstandete, im Querschnitt C-förmige oder doppelt-T-förmige Fahrzeugrahmen aufweisen, an denen die gattungsgemäßen Ladebordwandsysteme in der Regel problemlos befestigt werden können, bspw. mittels Bolzen-Mutter-Verbindungen, und in der Regel dabei sogar auf vom Hersteller des Lastkraftfahrzeugs vorgesehene Befestigungslöcher in den C-Profilen bzw. den Doppelt-T-Profilen zurückgegriffen werden kann, d.h. Bohr-, Schweiß- und Trennarbeiten am Fahrzeugrahmen, wenn überhaupt zulässig, nicht nötig sind, gestaltet sich die Befestigung der gattungsgemäßen Ladebordwandsysteme an den Rahmen von Fahrzeugen sehr viel aufwendiger und schwieriger, je kleiner, bezogen auf die damit zu transportierende Nutzlast, die Lastkraftfahrzeuge sind. Andererseits besteht in zunehmendem Maße ein erheblicher Bedarf an mit den gattungsgemäßen Ladebordwandsystemen auszurüstenden sog. Kleintransport-Lastkraftwagen, die im Bereich eines Gesamtgewichts von 3,5 t liegen, d.h. real im Bereich eines Gesamtgewichtes von ca. 2,8 t bis 5 t. Diese, im folgenden einfachheitshalber 3,5 t-Lastkraftfahrzeuge genannten Fahrzeuge, sind vielfach nach anderen konstruktiven Prinzipien aufgebaut als Lastkraftfahrzeuge bspw. mit einem Gesamtgewicht von 10 t bis 35 t.

Obwohl auch die 3,5 t-Lastkraftfahrzeuge regelmäßig einen Fahrzeugrahmen aufweisen, der entfernt vergleichbar ist mit den Fahrzeugrahmen großer Lastkraftfahrzeuge, sind die Fahrzeugrahmen an 3,5 t-Lastkraftwagen verständlicherweise im Hinblick auf die zu erreichende mechanische Festigkeit sehr viel graziler ausgebildet, da auch bei den Lastkraftwagen des 3,5 t-Typs in der Regel die Karosserie zur mechanischen Festigkeit des Fahrzeugs im Hinblick auf eine mögliche Torsion des Fahrzeugchassis, der Zuladungsfähigkeit und der gesamten Stabilität des Lastkraftfahrzeugs beiträgt, was im Kraftfahrzeugbau unter dem Stichwort "selbsttragende Karosserie" ein allgemeiner und für den Fachmann verständlicher Begriff ist

Da die Rahmenkonstruktion dieser 3,5 t-Lastkraftfahrzeuge zudem, wie oben schon erwähnt, von Hersteller zu Hersteller sehr unterschiedlich gestaltet sind, gestaltet sich die Befestigung der regelmäßig im Hinblick auf ihre Konstruktion standardisierten Ladebordwandsysteme von Lastkraftfahrzeug zu Lastkraftfahrzeug und von Hersteller zu Hersteller regelmäßig sehr aufwendig.

Dabei ist zu berücksichtigen, daB der Abstand der regelmäßig vorhandenen beiden Trägerrahmen des 3,5 t-Lastkraftfahrzeugs sehr viel geringer ist als bspw. bei den erwähnten Lastkraftfahrzeugen im Bereich der 10 t- bis 35 t-Klasse und die Rahmenelemente, die funktionell Trägerelemente sind, sind bei den kleinen Lastkraftfahrzeugen, wie oben schon erwähnt, sehr viel 1 graziler ausgebildet. Zu dieser Problematik gesellt sich ebenfalls die Problematik, daß auch die Befestigung der gattungsgemäßen Ladebordwandsysteme an den Tragrahmen der 3,5 t-Lastkraftfahrzeugen ebenfalls ohne mechanische Beeinträchtigung der Tragrahmen durch Bohren, Schweißen und Schleifen und dgl. erfolgen muß, da derartige mechanische Beeinflussungen einerseits die Festigkeit der Tragkonstruktion des Lastkraftfahrzeugs negativ beeinträchtigen können und andererseits regelmäßig Ausgangspunkte von Korrosionsbildung sind, was auf alle Fälle zu vermeiden ist. Vielfach lassen auch nationale Normvorschriften eine mechanische Bearbeitung bzw. mechanische und thermische Beeinflussung von tragenden Teilen eines Fahrzeugs, bspw. der Rahmenkonstruktion, nicht zu.

Es ist somit Aufgabe der vorliegenden Erfindung ein Ladebordwandsystem der eingangs genannten Art zu schaffen, mit dem standardisierte Ladebordwandsysteme unterschiedlicher standardisierter Größen an insbesondere kleinen Lastkraftfahrzeugen, insbesondere der 3,5 t-Klasse, ohne aufwendige Hilfskonstruktionen befestigt werden können, und ohne daß es einer mechanischen Bearbeitung der Rahmenkonstruktion dieser kleinen Lastkraftfahrzeuge bedarf, wobei die Befestigung der Ladebordwandsysteme auf die gleiche einfache Weise vonstatten gehen können soll, wie dieses bei großen Lastkraftfahrzeugen der 10 t- bis 35 t-Klasse von Lastkraftfahrzeugen schon möglich war und ist, wobei zur Befestigung der Ladebordwandsysteme die eigentliche Konstruktion des Ladebordwandsystems gegenüber bisherigen Ladebordwandsystemen und ihre Befestigung nicht verlassen werden soll, und daß die Montage und ggf. Demontage des Ladebordwandsystems einfach vonstatten gehen soll und die Befestigungs- und ggf. Löseprinzipien bisheriger Ladebordwandsysteme nicht verlassen werden sollen und die Befestigung selbst auch im Hinblick auf die dafür erforderlichen Gestehungskosten gering bleiben.

Gelöst wird die Aufgabe gemäß der Erfindung dadurch, daß das Anpaßelement am Trägerelement mit seinem horizontal ausgebildeten Schenkel befestigbar ist.

Der Vorteil 1 der erfindungsgemäßen Lösung besteht im wesentlichen darin, daß standardisierte Größen von Ladebordwandsystemen der gattungsgemäßen Art über die an jedem Ladebordwandsystem beidseitig angeordneten Befestigungselemente mittels eines prinzipiell lediglich als geeignet dimensioniertes Halbzeug in Form eine L-Profils bzw. eines rechtwinkligen Profils am Fahrzeugrahmen befestigt werden können, wobei lediglich die Länge der Schenkel des L-profil- bzw. winkelförmigen Anpaßelementes an die jeweiligen konstruktiven Gegebenheiten des Fahrzeugrahmens des Lastkraftfahrzeugs angepaßt werden müssen, an dem das Ladebordwandsystem befestigt werden soll. Die Vorratshaltung für solche Anpaßelemente geht im Hinblick auf die dafür benötigten Kosten im wesentlichen zu Null, wenn, wie gesagt, für das Anpaßelement käuflich erwerbbare, entsprechend profilierte Halbzeuge herangezogen werden. Auch die in diesem Zusammenhang zu bestimmende bzw. festzulegende Länge des L-profilförmigen Anpaßelementes ist unkritisch, da die Längen, die erfindungsgemäß zur sicheren Befestigung des Ladebordwandsystems am Fahrzeugrahmen des Lastkraftfahrzeugs benötigt werden, uneingeschränkt als Halbzeuge zur Verfügung stehen und im Prinzip nur abgelängt zu werden brauchen.

Gemäß einer vorteilhaften Ausgestaltung des Ladebordwandsystems weisen beide Schenkel des Anpaßelementes jeweils eine Mehrzahl von Befestigungslöchern auf, über die das Anpaßelement einerseits mit dem Trägerelement und andererseits mit dem Befestigungselement lösbar mittels eines Verbindungsmittels verbindbar ist. Das Anpaßelement selbst ist von der eingangs erwähnten gesetzlichen Restriktion, daß an den Tragrahmen des Lastkraftfahrzeugs nicht gebohrt, geschweißt und geschliffen werden darf, um es geeignet zur Anpassung an die jeweiligen konstruktiven Eigenheiten des Tragrahmens des Lastkraftfahrzeugs einerseits und die konstruktiven Eigenheiten des Befestigungselementes des Ladebordwandsystems andererseits anzupassen, an sich nicht betroffen. Aus diesem Grunde ist es prinzipiell möglich, eine mechanische Bearbeitung durch Bohren, Schweißen und Schleifen im Zuge der Anpassung an die beiderseitigen, vorerwähnten konstruktiven Gegebenheiten vorzunehmen. Die vorgeschlagene vorteilhafte Lösung gestattet jedoch eine beiderseitige Befestigung des Anpaßelementes an den Fahrzeugrahmen und am Befestigungselement des Ladebordwandsystems, wobei vorzugsweise als Verbindungsmittel ein Gewindebolzen bzw. eine Gewindeschraube vorgesehen ist bzw. sind, so daß mechanische Bearbeitungen des Anpaßelementes, wie angestrebt, entbehrlich sind und im Zuge der Ausbildung der Befestigung keine Teile des Tragrahmens und keine Teile der Befestigungselemente beschädigt werden.

Gemäß einer anderen vorteilhaften Ausgestaltung des Ladebordwandsystems weist das L-profilförmige Anpaßelement an seinem bei Befestigung am Trägerelement horizontal ausgebildeten ersten Schenkel an dessen freiem Ende eine Mehrzahl im wesentlichen rechtwinklig zum ersten Schenkeil vorstehende Haltestege auf. Die Haltestege haben dabei vorteilhafterweise eine doppelte Funktion. Einerseits stützen sie das Anpaßelement am Trägerelement horizontal ab und andererseits wird einem Verdrehen des im Einbauzustand horizontal liegenden einen Schenkels des Abstandselements relativ zur im Einbauzustand im wesentlichen vertikal verlaufenden Seite des Tragrahmens bzw. Trägerelements entgegengewirkt, zumal sowohl beim Anheben der Ladebordwand im Lastzustand als auch beim Absenken der Ladebordwand im Lastzustand und auch beim Absetzen der Ladebordwand auf einem Untergrund, bspw. der Straßenoberfläche, erhebliche Kräfte über das Ladebordwandsystem über die Befestigungselemente und das Anpaßelement in den Fahrzeugrahmen eingeleitet werden. Durch diese erfindungsgemäß vorgeschlagene Maßnahme wird einer inelastischen Verformung des Anpaßelementes vorgebeugt bzw. entgegengewirkt.

Bei einer noch anderen vorteilhaften Ausgestaltung des Ladebordwandsystems weist das L-profilförmige Anpaßelement an seinem bei Befestigung am Trägerelement vertikal ausgebildeten zweiten Schenkel an dessen freiem Ende eine Mehrzahl im wesentlichen winklig zum zweiten Schenkel vorstehende Stützstege auf, wobei anstelle mehrerer schenkelförmig ausgebildeter, vorstehender Stützstege ein einziger Stützsteg vorgesehen werden kann, der entsprechend groß dimensioniert ist. Auf diese Weise läßt sich ergänzend zu der vorangehend beschriebenen vorteilhaften Maßnahme eine noch weitere Verbesserung der Längsverbiegungssteifigkeit des Anpaßelementes relativ zu dem Fahrzeugrahmen bei auftretenden Belastungen erreichen.

Die Stützstege sind vorzugsweise an ihren freien Enden mit Löchern versehen, über die mittels eines Verbindungsmittels, das vorzugsweise ebenfalls ein Gewindebolzen bzw. eine Gewindeschraube sein kann, das Anpaßelement mit dem Trägerelement lösbar verbindbar ist, wobei auf Seiten des Trägerelementes dort vorhandene Löcher verwendet werden können, die bspw. werkseitig standardmäßig als Befestigungslöcher für die Montage für Quertraversen verwendet werden, an denen bspw. Kugelkopfkupplungen montiert werden können.

Um die Biegefestigkeit des Befestigungselementes des Ladebordwandsystems gegenüber dem Fahrzeugrahmen auf den Rahmen zu bzw. von diesem weg auf ein technisch mögliches Minimum zu reduzieren, ausgenommen der Eigenelastizität des Befestigungselementes und des Fahrzeugrahmens, ist vorteilhafterweise ein Stützelement vorgesehen, das das Befestigungselement im Bereich seines freien Endes gegenüber dem Trägerelement abstützt. Bei kleinen Lastkraftfahrzeugen, bspw. der 3,5 t-Klasse, ist der Abstand zwischen der Unterkante bzw. einer gedachten unteren, durch den Fahrzeugrahmen gebildeten Fläche zum Fahrbahnuntergrund, auf dem das Lastkraftfahrzeug steht bzw. fährt, naturgemäß erheblich geringer als bei Lastkraftfahrzeugen der 10 t- bis 30 t-Klasse. So steht bei kleinen Lastkraftfahrzeugen das Befestigungselement verhältnismäßig weit in Richtung des Fahrbahnuntergrundes mit einem beträchtlichen Teil mit seiner normalerweise ungestützten Seitenfläche nach unten. Das hat normalerweise die Folge, daß das Befestigungselement bei bestimmungsgemäßer Belastung des Ladebordwandsystems, insbesondere bei Last auf der Ladebordwand, einer Verdrehung auf den Fahrzeugrahmen hin bzw. von diesem weg, je nach Ort der Belastung, unterworfen ist. Die hier vorgeschlagene gesonderte Abstützung wirkt einer Verdrehmöglichkeit effektiv entgegen. Im einzelnen weist dabei das Stützelement, für das ebenfalls wie für das gesamte Ladebordwandsystem gilt, das es einfach aber hocheffektiv wirkend ausgebildet sein muß, vorzugsweise im Querschnitt im wesentlichen eine winkelförmige Struktur auf, wobei dessen einer Schenkel mittels Verbindungsmitteln mit dem Trägerelement lösbar verbindbar ist, und wobei hierfür die schon vorangehend erwähnten Löcher im Trägerelement bzw. dem Fahrzeugtragrahmen verwendet werden können, die für besagte Quertraversen für die Befestigung einer Kugelkopfvorrichtung verwendet werden.

Das Stützelement ist dabei vorzugsweise derart aus- und weitergebildet, daß der andere Schenkel des Stützelementes mit seinem freien Ende in ein am Befestigungselement ausgebildetes Führungselement stützend eingreift, so daß mittels dieser Variante des Stützelementes im Zusammenwirken mit dem Führungselement des Befestigungselementes der Vorteil einer einfachen Ausgestaltbarkeit und einer Verdrehfestigkeit des Befestigungselementes auf den Fahrzeugtragrahmen zu bei Belastung erreicht wird.

Grundsätzlich kann das am Befestigungselement ausgebildete Führungselement eine beliebige geeignete Konstruktion aufweisen, um der Stützfunktion im vorangehend beschriebenen Sinne gerecht zu werden, es ist aber vorteilhafterweise möglich, daß das am Befestigungselement ausgebildete Führungselement in Form eines geschlitzten Rohres ausgebildet ist, womit neben der Stützfunktion zudem eine Führungsfunktion ausgeübt wird, und zwar des Stützelementes relativ zum Befestigungselement. Ein weiterer wesentlicher Vorteil dieser Ausgestaltung des Ladebordwandsystems besteht darin, daß dadurch unterschiedliche relative Längen (in Fahrzeuglängsrichtung) der Befestigung des Stützelementes am Fahrzeugrahmen relativ zur Befestigung des Befestigungselementes über das Anpaßelement am Fahrzeugrahmen ausgeglichen werden können, bspw. dann, wenn für die Befestigung des Anpaßelementes einerseits und die Befestigung des Stützelementes andererseits am Fahrzeugrahmen werkseitig schon vorgesehene Befestigungslöcher benutzt werden sollen bzw. durch die erfindungsgemäße vorteilhafte Maßnahme benutzt werden können.

Grundsätzlich kann dabei das am Befestigungselement ausgebildete Führungselement eine beliebige geeignete Konstruktion aufweisen, um der bestimmungsgemäßen Führung und Stützung gerecht zu werden. Vorzugsweise weist aber das Befestigungselement ein Führungselement auf, das in Form eines axial geschlitzten Rohres ausgebildet ist, wobei in dieses axial geschlitzte Rohr vorzugsweise das freie Ende des Stützelementes mit seinem Führungskörper, der mit dem freien Ende verbunden ist, d.h. in das Führungselement, eingreift. Nach geeigneter Montage und Justierung des Stützelementes relativ zum Führungselement ist eine gegenseitige Verriegelung in dem eingenommenen mechanischen Sitz zueinander möglich, bspw. dadurch, daß der Führungskörper des Stützelementes radial spreizbar ausgebildet ist, bspw. durch konische Ausbildung, so daß beim Festdrehen einer darin im wesentlichen zentral aufnehmbaren Schraube bzw. eines Schraubbolzens der Führungskörper radial gespreizt wird und somit einen sicheren Sitz im Führungskörper einnimmt.

Bei einer Vielzahl von Fahrzeugrahmen von Lastkraftfahrzeugen des 3,5 t-Typs sind, unabhängig vom Hersteller des Lastkraftfahrzeugs, nach Art einer Norm Stützschenkelelemente ausgebildet, die an den vertikalen Seiten der Trägerelemente bzw. des Fahrzeugrahmens mit diesem fest verbunden ausgebildet sind. Auf diesen Stützschenkelelementen kann bspw. auch die eigentliche Ladefläche, auch Ladepritsche genannt, des Lastkraftfahrzeugs befestigt werden. Unabhängig davon, ob eine gesonderte Einzelladefläche bzw. Ladepritsche vorhanden ist oder nicht, bspw. dann, wenn eine im wesentlichen selbsttragende, kastenförmige Karosserie auf der Tragrahmenkonstruktion aufliegt, können diese Stützschenkelelemente zweckmäßigerweise auch dafür verwendet werden, über diese das L-profilförmige Abstandselement vorzugsweise mit dem Trägerelement zu verbinden. Bei dieser ausgesprochen vorteilhaften Ausgestaltung des Ladebordwandsystems kann ohne jegliche weitere Befestigungsmaßnahmen das Ladebordwandsystem über das Anpaßelement mit dem Tragrahmen verbunden werden. Vielfach weisen die vorangehend erwähnten Stützschenkelelemente werkseitig schon ein Durchgangsloch auf, vielfach sogar geeignet dimensionierte, in den Löchern befestigte Gewindemuttern bzw. Innengewindeansätze. Das L-profilförmige Anpaßelement kann deshalb mit seinem bei Befestigung horizontal ausgebildeten ersten Schenkel lösbar mittels eines Verbindungsmittels, bspw. einer Gewindeschraube oder eines Gewindebolzens, zu liegen kommend befestigt werden, auf oder unter dem Stützschenkelelement, wobei der erste Schenkel des Anpaßelementes dabei auf oder unter den werkseitig vorgesehenen Stützschenkelelementen aufliegt bzw. anliegt.

Das Ladebordwandsystem gemäß der Erfindung ist außerordentlich effizient, fest und einfach mit dem Trägerelement bzw. den den Fahrzeugrahmen bildenden Trägerelementen verbindbar, wenn die Trägerelemente in Form von im Querschnitt im wesentlichen rechteckigen Hohlrohren ausgebildet sind, wobei diese Hohlrohre auch als Hut- bzw. Doppelt-Hut-Profile im Kraftfahrzeugbereich bezeichnet werden. Sehr viele der unter den Typ der 3,5 t-last kraftwagen fallenden Lastkraftwagen weisen als Fahrzeugrahmen bzw. als Trägerelemente eben diese Hut- bzw. Doppelt-Hut-Profile auf.

Die Erfindung wird nun unter Bezugnahme auf die nachfolgenden schematischen Zeichnungen anhand eines Ausführungsbeispieles im einzelnen beschrieben. Darin zeigen:
- Fig. 1: in perspektivischer Darstellung ein Ladebordwandsystem gemäß dem Stand der Technik, das über Befestigungselemente, die Teil des Ladebordwandsystems sind, unmittelbar an voneinander beabstandeten Trägerelementen, die ein C-Profil aufweisen, durch Klauen befestigt ist, wobei derartige Trägerelemente typischerweise bei großen Lastkraftfahrzeugen der Klasse von 10 t bis 35 t verwendet werden,
- Fig. 2: in stark schematisierter Form einen Schnitt durch die Ladefläche eines Lastkraftfahrzeugs, unter der ein Fahrzeugrahmen angeordnet ist, dessen Trägerelemente aus Hut- bzw. Doppelt-Hut-Profilen bestehen,
- Fig. 3: eine Teildarstellung des erfindungsgemäßen Ladebordwandsystems im Bereich der Befestigung des Ladebordwandsystems an einem Lastkraftfahrzeug in auseinandergezogener Darstellung und
- Fig. 4: eine Darstellung gemäß Fig. 2, bei der die einzelnen Elemente des Ladebordwandsystems miteinander verbunden am Fahrzeugrahmen befestigt sind.

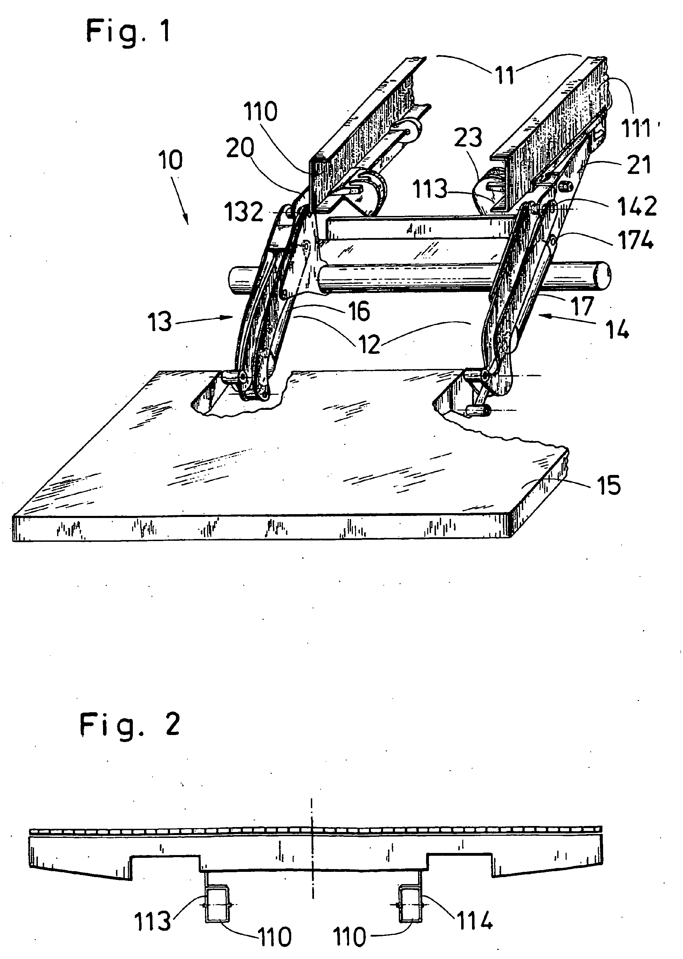

Das in Fig. 1 dargestellte Ladebordwandsystem 10, das im genannten gattungsbildenden Stand der Technik im einzelnen beschrieben worden ist (EP-B-1 000 802), weist ein Hub- und Klapptragwerk 12 auf, d.h. ein erstes Tragwerk 13 und ein zweites Tragwerk 14, wobei an das erste Tragwerk 13 geeignet ein Hubaktuator 16 und an das zweite Tragwerk 14 geeignet ein Klappaktuator 17 angelenkt sind.

Das in Fig. 1 dargestellte Ladebordwandsystem 10 ist somit sowohl zum Anheben einer mit dem Hub- und Klapptragwerk 12 verbundenen Ladebordwand 15 befähigt als auch zum Hochklappen der Ladebordwand 15 von der horizontalen Lage in die Vertikale und zum Herunterklappen von der Vertikalen in die horizontale Lage. Das nachfolgende beschriebenen Ladebordwandsystem 10 kann ein solches sein, wie es vorangehend skizziert worden ist, es kann aber auch ein solches sein, mit dem lediglich eine Hub- bzw. Absenkfunktion der Ladebordwand 15 bewirkt werden kann.

Auf den generellen Aufbau des Ladebordwandsystems 10 wird nachfolgend lediglich in dem Umfang eingegangen, der notwendig ist, um das erfindungsgemäße Ladebordwandsystem zu verstehen.

Das in Fig. 1 dargestellte Ladebordwandsystem 10 umfaßt, wie gesagt, im wesentlichen ein Hub- und Klapptragwerk 12, das wiederum aus einem ersten Tragwerk 14 besteht, das wiederum parallel voneinander beabstandet an einem Fahrzeug 11 über die Befestigungselemente 20, 21 befestigt ist. Das erste und das zweite Tragwerk 13, 14 bilden zusammen mit den Befestigungselementen 20, 21, das zweite Tragwerk 14 zusätzlich noch zusammen mit einem Klappaktuator 17, eine parallelogrammförmige Struktur. Mit dem ersten und dem zweiten Tragwerk 13, 14 ist die im wesentlichen plattenförmige Ladebordwand 15 zum Heben und Absenken einer Last (ohne Last dargestellt) und zum Verschließen eines Stauraumes des Fahrzeugs 11 drehbar verbunden. Mit dem ersten Tragwerk 13 wirkt ein Hubaktuator 16 zum Heben und Senken der Ladebordwand 15 zusammen. Ein Klappaktuator 17, der zum Verschwenken der Ladebordwand 15 von der Horizontalen in die Vertikale und umgekehrt dient, wirkt mit dem zweiten Tragwerk 14 zusammen und ist Teil seiner parallelogrammförmigen Struktur.

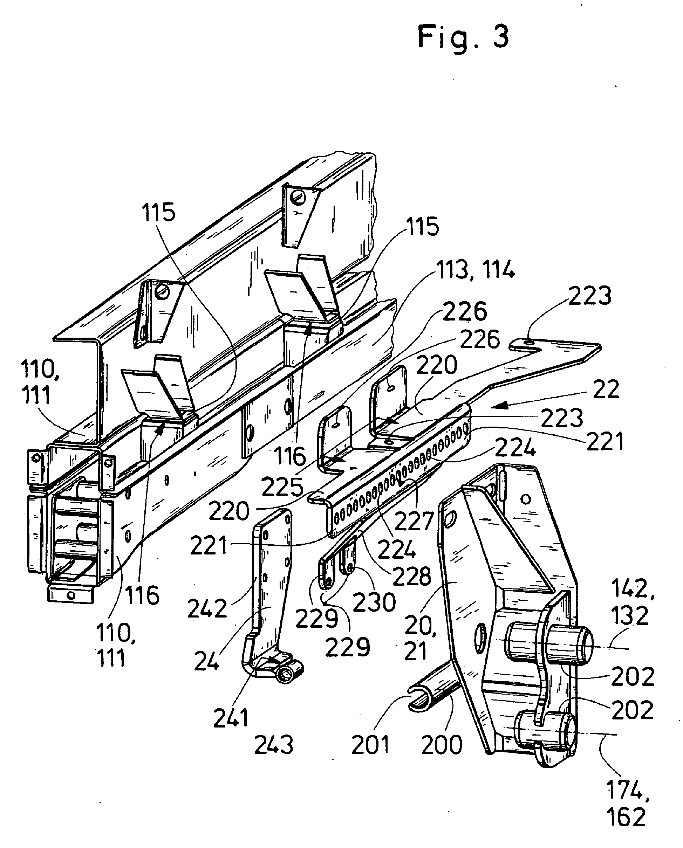

Teil der parallelogrammförmigstrukturierten Tragwerke 13, 14 sind die jeweiligen Befestigungselemente 20, 21, vgl. auch die Fig. 2 und 3. Diese hier das Tragwerk 13, 14 ebenfalls mit umfassenden Befestigungselemente 20, 21 bestehen bspw. aus flachen, blechförmigen Elementen, vgl. Fig. 1, in denen Achsbuchsen 202 für die Drehachsen 132, 162 sowie 142, 174 auf geeignete Weise aufgenommen sind. Die Befestigung der Befestigungselemente 20, 21 am Tragrahmen 110, 111 kann, anders als in der Darstellung gemäß Fig. 1 gezeigt, auch über Schrauben-Mutter-Verbindungen erfolgen, wenn bspw. seitens des Herstellers des Lastkraftfahrzeugs 11 in den Tragrahmen 110, 111 geeignete Durchgangslöcher für diese Zwecke schon werkseitig schon vorgesehen worden sind. Ein weiteres Eingehen auf die im Stand der Technik bekannten, gattungsgemäßen Ladebordwandsysteme 10 gemäß Fig. 1 ist für das weitere Verständnis nicht erforderlich.

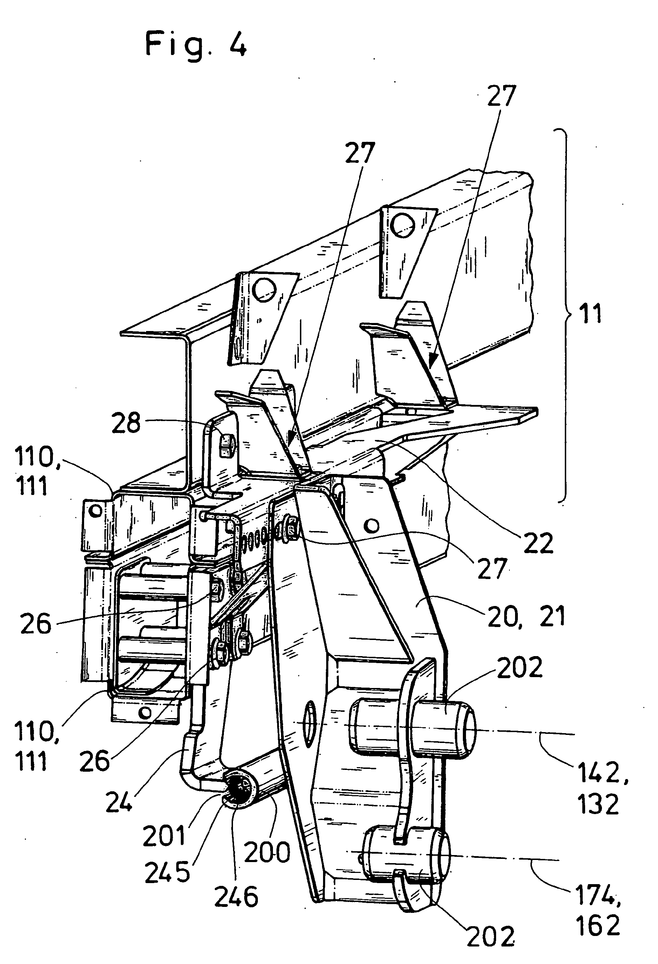

Fig. 2 zeigt in einer sehr schematischen Darstellung einen Schnitt durch die Ladefläche eines Lastkraftfahrzeugs 11 unter Weglassung aller hier für das Verständnis der Erfindung nicht nötigen Einzelheiten. Unterhalb der eigentlichen Ladefläche sind die Trägerelemente 110, 111, die den Fahrzeugrahmen bilden, beabstandet voneinander ausgebildet. Die Trägerelemente 110, 111 sind hier als sog. Hut-Profile bzw. Doppelt-Hut-Profile ausgebildet, vgl. auch die Fig. 3 und 4, wie sie insbesondere bei Lastkraftfahrzeugen 11 der sog. 3,5 t-Klasse eingesetzt werden. Diese Hut- bzw. Doppelt-Hut-Profile weisen eine sehr viel geringere Profilwandstärke als bspw. die im Zusammenhang mit Fig. 1 oben beschriebenen C-Profile, die regelmäßig für große Lastkraftfahrzeuge der 10 t-bis 35 t-Klasse eingesetzt werden. Der lichte Abstand der beiden Trägerelemente 110, 111 gemäß den Fig. 2 bis 4 ist regelmäßig erheblich geringer als der lichte Abstand der beiden C-Profile, die die Trägerelemente 110. 111 bei den in Fig. 1 dargestellten Lastkraftfahrzeug 11 bilden.

Der geringere Abstand der beiden Trägerelemente 110, 111 bei den Lastkraftfahrzeugen 11 gemäß den Fig. 2 bis 4 erfordert, je nach mit dem erfindungsgemäßen Ladebordwandsystem 10 auszurüstenden Lastkraftfahrzeug 11, Modifikationen der Befestigungselemente 20, 21 gegenüber der plattenförmigen Ausgestaltung der Befestigungselemente 20, 21 gemäß Fig. 1, wenn standardmäßige Ladebordwandsysteme 10 verwendet werden sollen. Diese Modifikationen der Befestigungselemente 20, 21, wie sie in den Fig. 3 und 4 dargestellt sind, sind gegenüber den lediglich plattenförmigen Ausgestaltungen, die hier allerdings nicht Gegenstand der Erfindung sind, anders ausgestaltet. Ebenso könnten hier auch plattenförmige Befestigungselemente 20, 21 verwendet werden, wie sie in Fig. 1 dargestellt sind, wenn der lichte Abstand der Trägerelemente 110, 111 des betreffenden Lastkraftfahrzeugs 11 dieses zuläßt bzw. das Ladebordwandsystem 10 selbst auf diesen geringeren Abstand konstruktiv schon abgestellt ist.

Die Trägerelemente 110, 111 weisen jeweilige Seiten bzw. Seitenflächen 113, 114 auf, die im wesentlichen vertikal zu einem hier nicht dargestellten Untergrund verlaufen, auf dem das Lastkraftfahrzeug 11 normalerweise steht bzw. fährt, vgl. insbesondere die Fig. 2 und 3.

Ein wesentliches Teil des erfindungsgemäßen Ladebordwandsystems ist eine Anpaßelement 22, das L-profilförmig bzw. rechtwinklig im Querschnitt ausgebildet ist. Beide Schenkel 220, 221 des Anpaßelementes 22 weisen eine Mehrzahl von Befestigungslöchern 223; 224 auf. Die Befestigungslöcher 224 können auf dem Schenkel 221 in Form eines Rasters vorgesehen sein, so daß bei der späteren Montage, worauf im einzelnen noch weiter unten eingegangen wird, das jeweils geeignete Befestigungsloch 224 verwendet werden kann. Der in den Figuren als oberer Schenkel dargestellte Schenkel 220 wird im folgenden mit erster Schenkel 220 bezeichnet, wohingegen der dazu rechtwinklige Schenkel 221 im folgenden zweiter Schenkel genannt wird. Der erste Schenkel 220 weist an seinem freien Ende 225 eine Mehrzahl im wesentlichen rechtwinklig zum ersten Schenkel 220 vorstehende Haltestege 226 auf. Grundsätzlich kann der erste Schenkel 220 aber auch zur Bildung eines einzigen Haltesteges 226 abgewinkelt sein, soweit dieses konstruktiv seitens der Trägerelemente 110, 111 möglich ist, an denen das Anpaßelement 22 jeweils befestigt werden soll. Das AnpaBelement 22, vgl. Fig. 3 und 4, weist am freien Ende 227 des zweiten, vertikal ausgebildeten Schenkels 221 eine Mehrzahl im wesentlichen winklig zum zweiten Schenkel 221 vorstehende Stützstege 228 auf. Auch hier ist es möglich, soweit die jeweils am mit dem Ladebordwandsystem 10 auszurüstenden Lastkraftfahrzeug 11 anzutreffenden konstruktiven Ausgestaltung der Trägerelemente 110, 111 dieses konstruktiv ermöglichen, anstelle einer Mehrzahl von Stützstegen 228 einen Stützsteg 228 entsprechend der Länge und ggf. vorhandener Befestigungslöcher in den Trägerelementen 110, 111 als einheitliches Stützelement 228 durchgehend auszubilden. Die Stützstege 228 weisen an ihren freien Enden 229 jeweilige Löcher 230 auf. Über diese Löcher 230 sind die Stützstege 228 mit den Trägerelementen 11, 12 verbindbar.

Zusätzlich zum L-profilförmigen Anpaßelement 22 ist ein Stützelement 24 vorgesehen, das das Befestigungselement 20, 21 relativ zu den Trägerelementen 110, 111 abstützt, wenn es an besagten Trägerelementen 110, 111, vgl. Fig. 4, durch geeignete Verbindungsmittel 26, bspw. Schraubbolzen-Verbindungen bzw. Schraubbolzen-Mutter-Verbindungen, befestigt ist. Das in den Fig. 3 und 4 dargestellte Stützelement 24 weist hier eine im wesentlichen winkelförmige Struktur auf, es sei aber darauf hingewiesen, daß für diese Stützfunktion des Stützelementes 24 auch andere konstruktive Ausgestaltungen des Stützelementes 24, bspw. in Form eines Rohres oder eines geeignet profilierten Elementes, möglich sind. Der Schenkel 242 des hier dargestellten winkelförmigen Stützelementes 24 kann an den Trägerelementen 110, 111 über dort ggf. werkseitig vorgesehene Befestigungslöcher befestigt werden, die normalerweise dazu dienen, eine Quertraverse zwischen den Trägerelementen 110, 111 aufzunehmen, an der dann bspw. eine Kugelkupplung für Anhänger ausgebildet ist.

Der andere Schenkel 243 des Stützelementes 24 ist mit einem Führungskörper 245 versehen, wobei der Führungskörper 245 in ein am Befestigungselement 20. 21 ausgebildetes Führungselement 200 lösbar eingreifen kann, das in Form eines axial geschlitzten 201 Rohres ausgebildet ist. Das rohrförmig ausgebildete Führungselement 200 ist bspw. am Befestigungselement 20, 21 befestigt, bspw. mittels einer SchweiBverbindung. Durch das Zusammenwirken des Führungskörpers 245 des Stützelementes 24 mit dem geschlitzten 201 Rohr des Führungselementes 20 kann nicht nur eine stützende Verbindung zwischen dem Stützelement 24 und dem Befestigungselement 20, 21 geschaffen werden, sondern auch eine kraftschlüssige Verbindung, wenn bspw. der Führungskörper 245 radial spreizbar ausgebildet ist, d.h. ggf. geringfügig konisch ausgebildet ist und derart konstruiert ist, daß beim Hineindrehen einer Schraube 246. vgl. Fig. 4, der Durchmesser des Führungskörpers 245 vergrößert wird und somit eine kraftschlüssige Verbindung zwischen Führungskörper 245 und Führungselement 200 hergestellt wird.

Herstellerseitig sind bei Lastkraftfahrzeugen des 3,5 t-Typs regelmäßig an den Trägerelementen 110, 111 eine Mehrzahl voneinander beabstandeter Stützschenkelelemente 15 ausgebildet, die fest mit den Trägerelementen 110, 111 verbunden sind, vgl. insbesondere die Fig. 3 und 4. Diese Stützschenkelelemente 115 weisen regelmäßig einen horizontal verlaufenden Stützbereich 116 auf, der wenigstens teilweise flächig ausgebildet ist. Auf oder unter diese wenigstens teilweise flächigen Stützbereiche 16 wird bei der Montage des L-profilförmigen Anpaßelementes 22 dessen erster Schenkel 220 gelegt und dort mittels Verbindungsmitteln, bspw. Schraubenbolzen-Verbindungen bzw. Schrauben-Mutter-Verbindungen, befestigt, wobei diese Verbindungsmittel in den Fig. 3 und 4 aufgrund der perspektivischen Darstellungen nicht sichtbar sind. In Fig. 3 ist aber in auseinandergezogenem Zustand der einzelnen Komponenten des erfindungsgemäßen Ladebordwandsystems 10 bei dem dort dargestellten L-profilförmigen Anpaßelement 22 ersichtlich, daß dort am oberen Schenkel 220 Befestigungslöcher 223 vorgesehen sind, durch die die Verbindungsmittel hindurchgreifen können.

Die am jeweiligen freien Ende 225 ausgebildeten schenkelförmigen Haltestege 226 werden bei Bedarf über dort ausgebildete Löcher mit Verbindungsmitteln 28 in Form von Schraubbolzen-Verbindungen bzw. Schrauben-Mutter-Verbindungen verbunden, vgl. Fig. 4.

Nachdem sowohl das Anpaßelement 22 als auch das Stützelement 24 mit den Trägerelementen 110, 111 auf vorbeschriebenen Weise verbunden worden sind, die Stützstege 228 des AnpaBelementes 22 können bspw. wenigstens teilweise mit den gleichen Schrauben-Mutter-Verbindungen bzw. Schraubenbolzen-Verbindungen, die auch zur Befestigung des Stützelements 24 dienen, mit den Trägerelementen 110, 111 verbunden werden, vgl. Fig. 4, werden die Befestigungselemente 20, 21 mit dem Anpaßelement 22 verbunden, indem zunächst die jeweiligen Führungselemente 200 des einen und des anderen Befestigungselementes 20, 21 jeweils auf den Führungskörper des Stützelementes 24 geschoben wird, vgl. Fig. 4, und dort geeignet positioniert werden. Nachfolgend wird das jeweilige Befestigungselement 20, 21 über Verbindungsmittel 27, bspw. in Form von Schrauben-Mutter-Verbindungen bzw. Schraubenbolzen-Verbindungen, mit dem zweiten Schenkel 224 des Anpaßelementes 22 verbunden, und zwar über die geeignet ausgewählten Befestigungslöcher 224, die am zweiten Schenkel 221 des Anpaßelementes 22 ausgebildet sind.

Damit ist die sehr einfache Montage, wie aufgabengemäß angestrebt, des Ladebordwandsystems 10 auch an in Form von Hut- bzw. Doppelt-Hut-Trägerprofilen ausgebildeten Tragrahmen, die die Trägerelemente 110, 111 bei Lastkraftfahrzeugen 11 des 3,5 t-Typs bilden, ebenso einfach möglich wie bei großen Lastkraftfahrzeugen 11, die über massiv und regelmäßig als C-Profile ausgebildete Trägerelemente 110, 111 verfügen.

### Bezugszeichenliste

- 10: Ladebordwandsystem
- 11: Fahrzeug
- 110: Trägerelement (Fahrzeugrahmen)
- 111: Trägerelement (Fahrzeugrahmen)
- 113: Seite Trägerelement
- 114: Seite Trägerelement
- 115: Stützschenkelelement
- 116: Stützbereich
- 12: Hubtragwerk
- 13: erstes Tragwerk
- 132: Drehachse
- 14: zweites Tragwerk
- 142: Drehachse
- 15: Ladebordwand
- 16: Hubaktuator
- 162: Drehachse
- 17: Klappaktuator
- 174: Drehachse
- 18:
- 19:
- 20: Befestigungselement
- 200: Führungselement (Befestigungselement)
- 201: Schlitz
- 202: Achsbuchse
- 21: Befestigungselement
- 22: Anpaßelement
- 220: erster Schenkel (Anpaßelement)
- 221: zweiter Schenkel (Anpaßelement)
- 223: Befestigungsloch (erster Schenkel)
- 224: Befestigungsloch (zweiter Schenkel)
- 225: freies Ende (erster Schenkel)
- 226: Haltesteg
- 227: freies Ende (zweiter Schenkel)
- 228: Stützsteg
- 229: freies Ende (Stützsteg)
- 230: Loch
- 24: Stützelement
- 240: Bereich
- 241: freies Ende
- 242: erster Schenkel (Stützelement)
- 243: zweiter Schenkel (Stützelement)
- 244: freies Ende (Stützelement)
- 245: Führungskörper
- 246: Schraube
- 25: Verbindungsmittel
- 26: Verbindungsmittel
- 27: Verbindungsmittel
- 28: neues Verbindungsmittel

## Patentansprüche

1. Ladebordwandsystem (10) zur Befestigung an Rahmen von Fahrzeugen (11), wobei der Fahrzeugrahmen im wesentlichen aus zwei voneinander im wesentlichen parallel beabstandeten Trägerelementen (110; 111) besteht, insbesondere Lastkraftwagen, umfassend wenigstens ein im wesentlichen parallelogrammförmiges, aus zwei im wesentlichen parallel voneinander beabstandeten Tragwerken (13, 14) bestehendes Hubtragwerk (12), eine im wesentlichen plattenförmige Ladebordwand (15) zum Heben und Absenken einer Last und wenigstens einen Hubaktuator (16) zum Heben und Senken der Ladebordwand (15), und wobei die Befestigung des ersten und des zweiten Tragwerks (13, 14) über jeweils ein gesondertes, im wesentlichen am Fahrzeugrahmen zu befestigendes Befestigungselement (20; 21) erfolgt, und jeweils an im wesentlichen vertikal ausgerichteten Seiten (113; 114) der Trägerelemente (110; 111) jeweils eines der Befestigungselemente (20; 21) über ein im Querschnitt im wesentlichen L-profilförmiges Anpaßelement (22) befestigbar ist, **dadurch gekennzeichnet, daß** das Anpaßelement (22) am Trägerelement (110; 111) mit seinem horizontal ausgebildeten Schenkel (220) befestigbar ist.

2. Ladebordwandsystem nach Anspruch 1, **dadurch gekennzeichnet, daß** beide Schenkel (220; 221) des Anpaßelementes (22) jeweils eine Mehrzahl von Befestigungslöchern (223; 226) aufweisen, über die das Anpaßelement (22) einerseits mit dem Trägerelement (111; 112) und andererseits mit dem Befestigungselement (20; 21) lösbar mittels eines Verbindungsmittels (25) verbindbar ist.

3. Ladebordwandsystem nach Anspruch 2, **dadurch gekennzeichnet, daß** das Verbindungsmittel (25) ein Gewindebolzen bzw. eine Gewindeschraube ist.

4. Ladebordwandsystem nach einem oder mehreren der Ansprüche 1 bis 3, **dadurch gekennzeichnet, daß** das L-profilförmige Anpaßelement (22) an seinem bei Befestigung am Trägerelement (111; 112) horizontal ausgebildeten ersten Schenkel (220) an dessen freiem Ende (225) eine Mehrzahl im wesentlichen rechtwinklig zum ersten Schenkel (220) vorstehender Haltestege (226) aufweist.

5. Ladebordwandsystem nach einem oder mehreren der Ansprüche 1 bis 4, **dadurch gekennzeichnet, daß** das L-profilförmige Anpaßelement (22) an seinem bei Befestigung am Trägerelement (111; 112) vertikal ausgebildeten zweiten Schenkel (221) an dessen freiem Ende (227) eine Mehrzahl im wesentlichen winklig zum zweiten Schenkel (221) vorstehende Stützstege (228) aufweist.

6. Ladebordwandsystem nach Anspruch 5, **dadurch gekennzeichnet, daß** die Stützstege (228) an ihren freien Enden (229) jeweilige Löcher (230) aufweisen, über die mittels eines Verbindungsmittels (25) das Anpaßelement (22) mit dem Trägerelement (111, 112) lösbar verbindbar ist.

7. Ladebordwandsystem nach Anspruch 6, **dadurch gekennzeichnet, daß** das Verbindungsmittel (25) ein Gewindebolzen bzw. eine Gewindeschraube ist.

8. Ladebordwandsystem nach einem oder mehreren der Ansprüche 1 bis 7, **dadurch gekennzeichnet, daß** ein Stützelement (24) vorgesehen ist, das das Befestigungselement (20; 21) im Bereich (240) seines freien Endes (241) gegenüber dem Trägerelement (111; 112) abstützt.

9. Ladebordwandsystem nach Anspruch 8, **dadurch gekennzeichnet, daß** das Stützelement (24) eine im Querschnitt im wesentlichen winkelförmige Struktur aufweist, wobei dessen einer Schenkel (242) mittels Verbindungsmitteln (26) mit dem Trägerelement (111; 112) lösbar verbindbar ist.

10. Ladebordwandsystem nach Anspruch 9, **dadurch gekennzeichnet, daß** der andere Schenkel (243) des Stützelementes (24) mit seinem freien Ende (244) in ein am Befestigungselement (20; 21) ausgebildetes Führungselement (200) stützend eingreift.

11. Ladebordwandsystem nach Anspruch 10, **dadurch gekennzeichnet, daß** das am Befestigungselement (20; 21) ausgebildete Führungselement (200) in Form eines axial geschlitzten (201) Rohres ausgebildet ist.

12. Ladebordwandsystem nach einem oder beiden der Ansprüche 10 oder 11, **dadurch gekennzeichnet, daß** das freie Ende (241) des Stützelementes (24) mit einem Führungskörper (245) verbunden ist, über den das Stützelement (24) in das Führungselement eingreift.

13. Ladebordwandsystem nach Anspruch 12, **dadurch gekennzeichnet, daß** der Führungskörper (245) radial spreizbar ausgebildet ist.

## Claims

1. Loading tailgate system (10) for attachment to frames of vehicles (11), in particular heavy goods vehicles, wherein the vehicle frame consists essentially of two carrier elements (110; 111) spaced apart from each other in a substantially parallel manner, comprising at least one substantially parallelogram-shaped lifting structure (12) consisting of two load bearing structures (13, 14) spaced apart from each other in a substantially parallel manner, a substantially panel-like tailgate (15) for raising and lowering a load and at least one stroke actuator (16) for raising and lowering the loading tailgate (15) and wherein the fixing of the first and second load bearing structures (13, 14) is realised through a separate fixing element (20; 21) in each case to be fixed essentially to the vehicle frame, and wherein on each of the substantially vertically orientated sides (113; 114) of the carrier elements (110; 111) one of the fixing elements (20; 21) in each case can be fixed via an adapting element with a substantially L-profile-shaped cross-section, **characterised in that** the adapting element (22) can be fixed to the carrier element (110; 111) with its horizontally formed arm (220).

2. Loading tailgate system according to claim 1, **characterised in that** the two arms (220; 221) of the adapting element (22) each comprise a plurality of fixing holes (223; 226), via which the adapting element (22) can be connected on the one hand to the carrier element (111; 112) and on the other hand to the fixing element (20; 21) in a detachable manner through connecting means (25).

3. Loading tailgate system according to claim 2, **characterised in that** the connecting means (25) comprise a threaded bolt or a threaded screw.

4. Loading tailgate system according to one or more of the claims 1 to 3, **characterised in that** the L-profile-shaped adapting element (22) comprises at the free end of its first arm (220) formed horizontally upon fixing to the carrier element (111; 112) a plurality of retaining webs (226) projecting substantially at right angles to the first arm (220).

5. Loading tailgate system according to one or more of the claims 1 to 4, **characterised in that** the L-profile-shaped adapting element (22) comprises at the free end (227) of its second arm (221) formed vertically upon fixing to the carrier element (111; 112) a plurality of supporting webs (228) projecting substantially at an angle to the second arm (221).

6. Loading tailgate system according to claim 5, **characterised in that** the supporting webs (228) comprise holes (230) at their free ends (229), via which the adapting element (22) can be detachably connected to the carrier element (111, 112) through connecting means (25).

7. Loading tailgate system according to claim 6, **characterised in that** the connecting means (25) comprise a threaded bolt or a threaded screw.

8. Loading tailgate system according to one or more of the claims 1 to 7, **characterised in that** a supporting element (24) is provided which supports the fixing element (20; 21) in the region (240) of its free end (241) in relation to the carrier element (111; 112).

9. Loading tailgate system according to claim 8, **characterised in that** the support element (24) has a substantially angular cross-section, wherein one of its arms (242) can be detachably connected to the carrier element (111; 112) through connecting means (26).

10. Loading tailgate system according to claim 9, **characterised in that** the other arm (243) of the support element (24) engages with its free end (244) in a guide element (200) formed on the fixing element (20; 21).

11. Loading tailgate system according to claim 10, **characterised in that** the guide element (200) formed on the fixing element (20; 21) is formed as an axially slotted tube (201).

12. Loading tailgate system according to one or both of the claims 10 or 11, **characterised in that** the free end (241) of the support element (24) is connected to a guide body (245), via which the support element (24) engages in the guide element.

13. Loading tailgate system according to claim 12, **characterised in that** the guide body (245) is formed so that it can expand radially.

## Revendications

1. Système de hayon élévateur (10), à fixer sur des châssis de véhicules (11), le châssis de véhicule étant composé essentiellement de deux éléments supports (110 ; 111) espacés l'un de l'autre de façon sensiblement parallèle, en particulier des camions, comprenant au moins un système porteur de levage (12), essentiellement en forme de parallélogramme, composé de deux systèmes porteurs (13, 14) espacés l'un de l'autre de façon sensiblement parallèle, un hayon de chargement (15) sensiblement plat, pour lever et abaisser une charge, et au moins un actionneur de levage (16), pour lever et abaisser le hayon de chargement (15), et où la fixation des premier et deuxième systèmes porteurs (13, 14) s'effectue par l'intermédiaire chaque fois d'un élément de fixation (20 ; 21) séparé, à fixer essentiellement sur le châssis de véhicule, et apte à être fixé chaque fois sur des côtés (113 ; 114), orientés sensiblement verticalement, des éléments supports (110 ; 111), chaque fois d'un des éléments de fixation (20 ; 21), par l'intermédiaire d'un élément d'adaptation (22) à section transversale sensiblement en forme de profil en L, **caractérisé en ce que** l'élément d'adaptation (22) est susceptible d'être fixé sur l'élément support (110 ; 111) par sa branche (220) horizontale.

2. Système de hayon élévateur selon la revendication 1, **caractérisé en ce que** les deux branches (220 ; 221) de l'élément d'adaptation (22) présentent chacune une pluralité de trous de fixation (223 ; 226), par lesquels l'élément d'adaptation (22) est apte à être relié, d'une part, à l'élément support (111 ; 112) et, d'autre part, de façon amovible, à l'élément de fixation (20 ; 21), à l'aide d'un moyen de liaison (25).

3. Système de hayon élévateur selon la revendication 2, **caractérisé en ce que** le moyen de liaison (25) est un boulon fileté ou une vis filetée.

4. Système de hayon élévateur selon l'une des revendications 1 à 3, **caractérisé en ce que** l'élément d'adaptation (22) en forme de profil en L présente, sur sa première branche (220), horizontale lors de la fixation sur l'élément support (111 ; 112), à son extrémité (225) libre, une pluralité de nervures de maintien (226) faisant saillie sensiblement perpendiculairement par rapport à la première branche (220).

5. Système de hayon élévateur selon l'une des revendications 1 à 4, **caractérisé en ce que** l'élément d'adaptation (22) en forme de profil en L présente, sur sa deuxième branche (221), verticale lors de la fixation sur l'élément support (111 ; 112), à son extrémité (227) libre, une pluralité de nervures d'appui (228) faisant saillie sensiblement selon un certain angle par rapport à la deuxième branche (221).

6. Système de hayon élévateur selon la revendication 5, **caractérisé en ce que** les nervures d'appui (228) présentent, à leurs extrémités (229) libres, des trous (230) respectifs, par lesquels l'élément d'adaptation (22) peut être relié, de façon amovible, à l'élément support (111 ; 112), à l'aide d'un moyen de liaison (25).

7. Système de hayon élévateur selon la revendication 6, **caractérisé en ce que** le moyen de liaison (25) est un boulon fileté ou une vis filetée.

8. Système de hayon élévateur selon l'une des revendications 1 à 7, **caractérisé en ce qu'**est prévu un élément d'appui (24), soutenant l'élément de fixation (20 ; 21) par rapport à l'élément support (111 ; 112), dans la zone (240) de son extrémité (241) libre.

9. Système de hayon élévateur selon la revendication 8, **caractérisé en ce que** l'élément d'appui (24) présente une structure à section transversale sensiblement en forme de cornière, dont une branche (242) est apte à être reliée, de façon amovible, à l'élément support (111 ; 112), à l'aide de moyens de liaison (26).

10. Système de hayon élévateur selon la revendication 9, **caractérisé en ce que** l'autre branche (243) de l'élément d'appui (24) s'engage, avec effet d'appui, par son extrémité (224) libre, dans un élément de guidage (200) réalisé sur l'élément de fixation (20 ; 21).

11. Système de hayon élévateur selon la revendication 10, **caractérisé en ce que** l'élément de guidage (200) réalisé sur l'élément de fixation (20 ; 21) a la forme d'un tube fendu axialement (201).

12. Système de hayon élévateur selon l'une des revendications 10 et 11 ou les deux, **caractérisé en ce que** l'extrémité libre (241) de l'élément d'appui (24) est reliée à un corps de guidage (245), par l'intermédiaire duquel l'élément d'appui (24) s'engage dans l'élément de guidage.

13. Système de hayon élévateur selon la revendication 12, **caractérisé en ce que** le corps de guidage (245) est réalisé de façon à pouvoir être écarté radialement.
